# EUROPEAN PATENT APPLICATION

(11) **EP 4 190 164 A1**
(43) Date of publication of application: **07.06.2023**
(21) Application number: 21212260.0
(22) Date of filing: 03.12.2021
(51) Int. Cl.: A23J 1/00, A23J 1/12, A23J 3/14, A23J 3/22, A23J 3/26, A23K 10/30, A23K 10/38, A23K 40/25, A23L 7/20, A23L 13/40, A23L 33/185, A23L 33/22, A23P 30/25, C12F 3/06

(54) **LOW MOISTURE TEXTURISED PLANT PROTEIN FROM BREWER'S SPENT GRAIN**

(71) Applicant: Circular Food Solutions AG, 9240 Uzwil (CH)
(72) Inventor: WITSCHI, Friedrich, 8260 Stein am Rhein (CH); PETRY, Carsten, 8400 Winterthur (CH)
(74) Representative: Hepp Wenger Ryffel AG

(57) **Abstract**

The present disclosure relates to a method for producing a texturised plant protein. The method comprises the steps of
a) grinding of brewer's spent grain, BSG,
b) providing ingredients for obtaining a mixture, the ingredients comprising 25% to 60% by weight of the ground BSG and at least a plant protein,
c) processing the mixture in an extruder, wherein a homogenous fibrous structure is generated in the extruder to obtain a texturised plant protein,
d) cutting the texturized plant protein, and
e) drying the texturized vegetable protein after cutting.

## Description

The present disclosure relates to a method for producing a high moisture texturised plant protein and a corresponding system. The disclosure also encompasses a vegetarian food product produced with said method or said system. More particularly, the present invention relates to a multipurpose ready-to-use high protein texturate obtained from brewer's spent grain and other vegetable protein powders and a process for preparing the same.

The demand for high protein foods in which several protein sources are used of which major contribution arises from plant sources has risen in recent years. The technological advances concerning the creation of a new texture particularly using vegetable protein have led to the development of texturised vegetable protein (TVP) or texturised plant protein (TPP) or meat analogue.

The use of an extruder under appropriate pressure-shear-temperatures combination yields a product that is fibrous in nature, filamentary in structure, with toughness and chewy texture of meat. This whole process is called thermoplastic extrusion. The advantages of this technology lie in low product cost e.g. because the raw material to be processed is low in cost.

The thermoplastic extrusion process involves the preparation of brewer's spent grain mixture along with other ingredients followed by feeding the mixture into a cooking extruder wherein it is subjected to heat, shear and pressure. When this cooked viscoelastic mass comes out of a restriction, conventionally known as die, the fibrous expanded structure is formed which solidifies to hard texture on cooling or drying. On rehydration and cooking, the fibrous TVP can provide a texture/bite and a mouthfeel comparable to cooked meat.

EP 3 512 352 A1 discloses food compositions, particularly pet food compositions, having a high content of plant protein. The plant protein is prepared by processing Brewer's Spent Grain (BSG), having a moisture content of about 15 % to about 35% by weight, so as to reduce the particle size of the BSG and separating the processed BSG so as to provide a low particle size, high protein fraction.

However, BSG is widely viewed as food waste or side stream of the brewing, malt and spirits beverage industry and not commonly used in human food products. This is due to the fact that the processing of high amounts of BSG is technically challenging.

The present invention has been made in view of the above problems. An object of the present invention is to develop a brewer's spent grain multipurpose food ingredient having high protein content. Another object of the present invention is to provide a brewer's spent grain multipurpose food ingredient in ready-to-use form for convenience to consumers. Still another object of the present invention is to develop a brewer's spent grain multipurpose food ingredient having high protein content in ready-to-use form using texturised vegetable protein (TVP) as the starting material. A further object of the present invention is to provide a process for preparing a brewer's spent grain multipurpose food ingredient having high protein content in ready-to-use form texturised vegetable protein (TVP).

The invention is defined in the independent claims. Dependent claims described preferred embodiments.

The present disclosure relates to a method for producing a texturised plant protein. The method comprises the steps of
a) grinding of brewer's spent grain, BSG,
b) providing ingredients for obtaining a mixture, the ingredients comprising 25% to 60% by weight of the ground BSG and at least a plant protein,
c) processing the mixture in an extruder, wherein a homogenous fibrous structure is generated in the extruder to obtain a texturised plant protein,
d) cutting the texturized plant protein, and
e) drying the texturized vegetable protein after cutting.

Various embodiments may preferably implement the following features:

Preferably, the ingredients comprise 30% to 55% by weight of BSG, more preferably 45% to 50% by weight of BSG.

Preferably, the dried texturized plant protein is sieved.

Preferably, the ingredients are mixed to a pre-mixture in step b) and the pre-mixture is provided to the extruder.

Preferably, the method further comprises dehydrating the BSG before step a).

Preferably, the method further comprises adding water to the mixture in the extruder during step c), and further preferably comprises pre-hydration of the BSG in another part in the extruder during step c).

Preferably, the method further comprises rehydrating the dehydrated BSG prior to or after step a), preferably in a preconditioner.

Preferably, the ingredients comprise one or more of pulses protein, preferably pea protein, soy protein, wheat gluten, gluten protein, oilseeds, protein isolates, protein concentrates, microalgae or water.

Preferably, the BSG comprises barley, wheat, oat, millet, sorghum, cassava root, rye, rice, maize or spent grain protein concentrate.

Preferably, the extruder is at least partially cooled to 130 °C to 170 °C, preferably to 150 °C.

Preferably, the downstream side of the extruder is hotter than the upstream side, and/or Preferably, a gas is added, preferably CO₂, during step b) or c).

The disclosure also relates to a system for producing a texturised plant protein, using the method as described above, the system comprising:
a grinder configured to grind brewer spent grain, BSG,
an extruder configured to process ingredients comprising BSG and at least one plant protein to obtain a dry texturised plant protein having a homogenous fibrous structure,
a cutting device, and
a drying device.

Preferably, the system further comprises a sieving device, preferably arranged after the drying device and/orwherein the system further comprises a preconditioner for hydration of the BSG.

The disclosure also encompasses a vegetarian food product, preferably a burger patty, comprising a texturised plant protein produced according to the method as described above or the system as described above.

Preferably, the vegetarian food product comprises 30 % to 55 % by weight of texturised plant protein, TPP, preferably 45 to 50 % by weight of TTP produced according to the method as described above or the with the system as described above.

Preferably, the vegetarian food product comprises micronutrients, preferably minerals, more preferably at least one of iron, zinc or magnesium and/or vitamins, preferably at least one of B-Group, C or D.

Preferably, the vegetarian food product comprises a fermentation of the texturised plant protein with starter cultures, preferably food grade bacteria and fungi.

The invention will further be described with reference to the figures. Therein,
Fig. 1 shows a flow chart of a basic configuration according to the present disclosure,
Fig. 2 shows a flow chart of an exemplary embodiment of the present disclosure, and
Fig. 3 shows a flow chart of a further exemplary embodiment of the present disclosure.

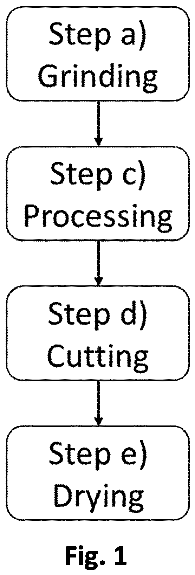

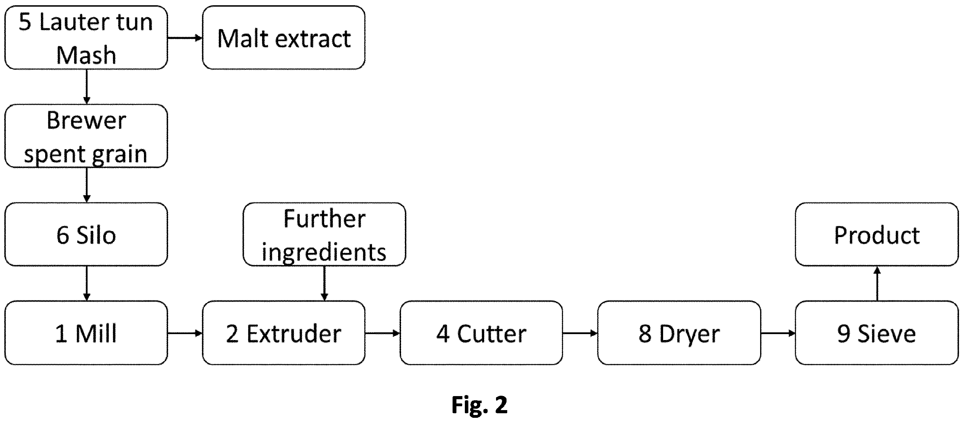

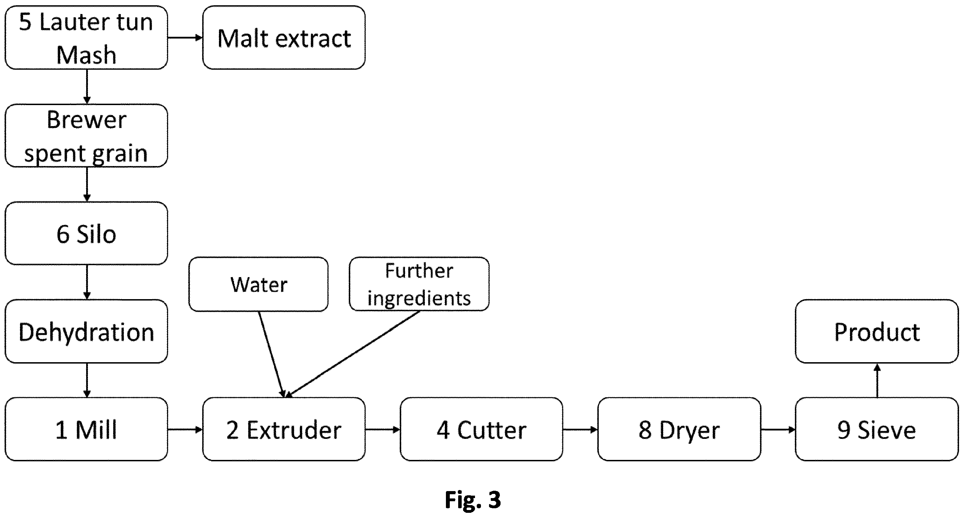

Fig. 1 depicts a basic configuration of a method according to the present disclosure, a corresponding system is shown in Figs. 2 and 3. In order to perform the method according to the disclosure or use the system according to the disclosure, brewer's spent grain (BSG) may be provided. BSG may also be referred to as brewer grains or spent grains from the brewing, malt, and spirits beverage industry.

The method comprises the steps of a) grinding brewer's spent grain (BSG). The grinding is performed in a grinder 1. The grinder 1 may be a mill, e.g. a turbo mill or a colloid mill. The ground BSG is mixed with further ingredients in a step b), wherein the BSG amounts to 25% to 60% by weight of the overall mixture, i.e. all ingredients. The obtained mixture is processed in an extruder 2 in step c). The mixing in step b) may be performed directly in the extruder 2 or before adding the mixture to the extruder 2. Alternatively, the ingredients may be mixed to a pre-mixture in step b) and set pre-mixture may be provided to the extruder 2. In this case, mixing is performed prior to the processing step. Mixing of the ingredients may be performed in a silo, a buffer tank, or any tub suitable for the purpose.

During the processing step c) in the extruder 2, a homogenous fibrous structure is generated to obtain a texturised plant protein (TPP) or texturised vegetable protein (TVP). A homogenous fibrous structure may particularly refer to an alignment of the fibres present in BSG and the other ingredients in essentially the same direction. The method further comprises cutting the texturised plant protein in step d). Said step is performed in a cutting device 4 such as a cutter. After step d), the cut texturised plant protein is dried (step e)) in a drying device 8. The drying device 8, i.e. the dryer, may be a fluid bed dryer or any other suitable form of dryer.

BSG may be obtained from a brewing process, e.g. during beer production, The BSG may be directly used in its hot state having a temperature of 60 °C to 70 °C after it is extracted from a lauter tun 5 or the mash. The grinding step a) may thus be performed with hot BSG which is subsequently provided to the extruder 2. Thereby, energy consumption may be reduced since less additional energy or heat has to be provided during extrusion.

Preferably, the ingredients comprise 30% to 55% by weight of BSG, more preferably 45% to 50% by weight. The ingredients may comprise one or more of pulses protein, preferably pea protein, soy protein, wheat gluten, gluten protein, oilseeds, protein isolates, protein concentrates, microalgae orwater. The BSG may comprise barley, wheat, oat, millet, sorghum, cassava root, rye, rice, maize, spent grain protein concentrate or any mixture of the above depending on the preceding brewing process.

The dried texturised plant protein may be sieved in a sieve 9 after step e).

The ingredients may be mixed to a pre-mixture in step b) and said pre-mixture may be provided to the extruder 2.

Before the grinding step a), the BSG may be dehydrated. The dehydration may be performed by drying and/or pressing. Also, during processing (step c)) in the extruder 2, water may be added to the mixture. Moreover, further water may be added in another part of the extruder during step c) for further pre-hydration.

In order to adjust the water content of the BSG, it may be rehydrated prior to after step a), i.e. grinding of the BSG in the mill 1. Said rehydration may be performed by adding water to the BSG or the mixture of BSG and further ingredients in a preconditioner.

The resulting product, i.e. the texturised plant protein, obtained with the above method of system is a low moisture texturised plant protein having a water content of 5% to 12% by weight, preferably 8% to 10% by weight. The water content and other properties of the product may be adjusted by changing certain parameters of the extruder 2 such as the dimension and/or angles of the screw(s), the dimension of the barrel, length of the extrusion, temperature of the extrusion process, or the used die.

The extruder 2 may be at least partially cooled to maintain a temperature of 130-170 °C and more preferred 150 °C. The downstream side of the extruder 2 may be hotter than the upstream side.

The extruder 2 may be preheated before the mixture is provided to the extruder 2 or mixed in the extruder 2, respectively. Different areas of the extruder 2 may be heated or cooled differently. It may be sufficient to switch off a heating of the extruder 2. At least the last segment of the extruder 2 may be cooled.

The present disclosure also relates to a corresponding system for producing a texturised plant protein by using the method as described above, as exemplarily shown in Figs. 2 or 3. The system comprises a grinder 1 configured to grind BSG and an extruder 2 configured to process ingredients comprising BSG and at least one plant protein to obtain a texturised plant protein having a homogenous fibrous structure. The system further comprises a cutting device 4 configured to cut the texturised plant protein. After cutting, the texturised plant protein is dried in a drying device 4. The dryer may be a fluid bed dryer.

Moreover, a sieving device 9 may be provided for sieving the dried texturised plant protein. The sieve 9 may also be provided prior to the dryer 8.

A preconditioner may be provided for hydration of the BSG.

Fig. 2 describes an exemplary embodiment according to the present disclosure. Unless indicated otherwise, this embodiment is fully compatible with the description above. According to the flowchart of Fig. 2, BSG is obtained from the mash in a lauter tun 5. Moreover, malt extract may also be obtained from the mash. BSG is stored in a silo 6 and subsequently provided to a mill 1. As described above, warm or hot BSG may be used. The BSG may also be dehydrated or rehydrated before or after milling. The milled or ground BSG is subsequently provided to an extruder 2 together with further ingredients. The ingredients may also be mixed prior to filling them into the extruder 2. In the extruder 2, a homogenous fibrous structure is generated to obtain a texturised plant protein. The obtained texturised plant protein is subsequently cut in a cutter 4, dried in a dryer 8 and optionally sieved in a sieve 9 to generate the final product, a low moisture (dry) texturised plant protein (TPP) or texturised vegetable protein (TVP), respectively.

Fig. 3 describes an exemplary embodiment according to the present disclosure. Again, this example is fully compatible with the above description unless indicated otherwise. In addition to the example of Fig. 2, the BSG is dehydrated prior to grinding it in the mill 1. Therefore, water is added during the processing step in the extruder 2. As described above, the wet texturised plant protein obtained by the extrusion process in the extruder 2 is subsequently cut, dried and preferably sieved to obtain the final product.

According to a first example composition, BSG having a high water content was ground, mixed with protein isolate and water, extruded and further processed as explained above to obtain a dry, i.e. low moisture texturised plant protein.

According to a second example, BSG with a low water content was rehydrated prior to grinding, mixed with protein isolate, protein concentrate and water, extruded and further processed as explained above to obtain a dry texturised plant protein.

According to a third example, BSG was dewatered in a drying device. Subsequently, the dry BSG was ground, rehydrated, mixed with wheat gluten, protein concentrate and water, extruded and further processed as explained above to obtain a dry texturised plant protein.

According to a fourth example, BSG was dewatered in a drying device. Subsequently, the dry BSG was rehydrated, mixed with wheat gluten, flour and water, extruded and further processed as explained above to obtain a dry texturised plant protein.

The present disclosure also relates to a food product, in particular a vegetarian food product, comprising a texturised plant protein produced according to the method or by the system as disclosed herein. In particular, the food product may comprise 30% to 55% by weight of BSG, preferably 45% to 50% by weight. The food product may comprise 40% to 75% by weight of texturised plant protein, preferably 50% to 70% by weight of texturised plant protein.

Moreover, the food product may comprise micronutrients, preferably minerals, more preferably at least one of iron, zinc or magnesium and/or vitamins, preferably at least one of B-Group, C or D.

The texturised plant protein comprising a high amount of BSG as described above may be mixed with further ingredients (e.g. flavours, stabilising ingredients, salt, protein, etc.), water and/or oil to form a dough or mix. Said dough or mix may then be processed to obtain a food product.

The texturised plant protein comprising a high amount of BSG as described above may be fermented using food grade bacteria and fungi starter cultures (e.g. lactobacillus, staphylococcus, and penicillium species). By fermentation of the texturised plant protein flavour may be added and the subsequent food product may be stabilised (e.g. vegetarian sausage or salami).

Said food product may comprise vegetarian Burger Patties, vegetarian Sausage, vegetarian Samosas, vegetarian Dumplings, vegetarian Gyros, vegetarian Goulash, vegetarian Kebab, vegetarian Pulled Pork, vegetarian Pulled Beef, vegetarian Mince Meat, vegetarian Schnitzel, vegetarian Hot Dogs, vegetarian Meat Balls, vegetarian Chicken Nuggets, vegetarian Chorizo, vegetarian Chicken Strips or vegetarian Züri Geschnetzeltes.

The present disclosure thus provides a method, system and food product which uses brewer's spent grain as a main ingredient, which has mainly been classified as food waste or byproduct and was thus until now not easily accessible for production of human food products. The addition of BSG to obtain low moisture texturized vegetable protein as a functional fiber and protein supplement improves the texture and lowers the cost compared to similar ingredients. Moreover, using an upcycled ingredient from the beverages industry significantly improves the CO₂ footprint of the foods produced with BSG.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### List of reference signs

- 1: Grinder, mill, colloid mill, turbo mill
- 2: Extruder
- 4: Cutter, Cutting device
- 5: Lauter tun
- 6: Silo
- 8: Dryer, Drying device
- 9: Sieve, Sieving device

## Claims

1. Method for producing a texturised plant protein, the method comprising the steps of:
a) grinding of brewer's spent grain, BSG,
b) providing ingredients for obtaining a mixture, the ingredients comprising 25% to 60% by weight of the ground BSG and at least a plant protein,
c) processing the mixture in an extruder (2), wherein a homogenous fibrous structure is generated in the extruder (2) to obtain a texturised plant protein,
d) cutting the texturized plant protein, and
e) drying the texturized vegetable protein after cutting.

2. Method according to claim 1, wherein the ingredients comprise 30% to 55% by weight of BSG, preferably 45% to 50% by weight of BSG.

3. Method according to claim 1 or 2, wherein the dried texturized plant protein is sieved.

4. Method according to any one of the preceding claims, wherein the ingredients are mixed to a pre-mixture in step b) and the pre-mixture is provided to the extruder (2).

5. Method according to any one of the preceding claims, further comprising dehydrating the BSG before step a).

6. Method according to any one of the preceding claims, further comprising adding water to the mixture in the extruder (2) during step c), and
further preferably comprising pre-hydration of the BSG in another part in the extruder (2) during step c).

7. Method according to claim 5 or 6, further comprising rehydrating the dehydrated BSG prior to or after step a), preferably in a preconditioner.

8. Method according to any one of the preceding claims, wherein the ingredients comprise one or more of pulses protein, preferably pea protein, soy protein, wheat gluten, gluten protein, oilseeds, protein isolates, protein concentrates, microalgae or water, and/or
wherein the BSG comprises barley, wheat, oat, millet, sorghum, cassava root, rye, rice, maize or spent grain protein concentrate.

9. Method according to any one of the preceding claims, wherein the extruder (2) is at least partially cooled to 130 °C to 170 °C, preferably to 150 °C,
wherein preferably the downstream side of the extruder (2) is hotter than the upstream side, and/or
wherein a gas is added, preferably CO₂, during step b) or c).

10. System for producing a texturised plant protein, using the method according to any one of claims 1 to 9, the system comprising:
a grinder (1) configured to grind brewer spent grain, BSG,
an extruder (2) configured to process ingredients comprising BSG and at least one plant protein to obtain a dry texturised plant protein having a homogenous fibrous structure,
a cutting device (4), and
a drying device (8).

11. System according to claim 10, wherein the system further comprises a sieving device (9), preferably arranged after the drying device (8) and/or
wherein the system further comprises a preconditioner for hydration of the BSG.

12. Vegetarian food product, preferably a burger patty, comprising a texturised plant protein produced according to the method of any one of claims 1 to 9 or the system according to claim 10 or 11.

13. Vegetarian food product according to claim 12 comprising 30 % to 55 % by weight of texturised plant protein, TPP, preferably 45 to 50 % by weight of TTP produced according to the method of any one of claims 1 to 9 or the with the system according to claim 10 or 11.

14. Vegetarian food product according to claim 12 or 13, comprising micronutrients, preferably minerals, more preferably at least one of iron, zinc or magnesium and/or vitamins, preferably at least one of B-Group, C or D.

15. Vegetarian food product according to claim 12 to 14, comprising a fermentation of the texturised plant protein with starter cultures, preferably food grade bacteria and fungi.
